# EUROPEAN PATENT APPLICATION

(11) **EP 1 939 764 A2**
(43) Date of publication of application: **02.07.2008**
(21) Application number: 07023774.8
(22) Date of filing: 07.12.2007
(51) Int. Cl.: G06F 17/30

(54) **Media system having synchronization with preemptive prioritization of synchronization order**

(30) Priority: 14.12.2006 US 875180 P; 04.12.2007 US 950227
(71) Applicant: QNX Software Systems GmbH & Co. KG, 76307 Karlsbad (DE)
(72) Inventor: Cardamore, Dan, Ottawa Ontario (CA)
(74) Representative: Grünecker, Kinkeldey, Stockmair & Schwanhäusser Anwaltssozietät

(57) **Abstract**

A media system includes media devices having media files arranged in folders and a database adapted to store information about the media files and/or folders. A synchronizer is used to synchronize information about the media files and/or folders with the database. The synchronizer synchronizes the information to a folder synchronization order. The determined folder synchronization order may be preempted by a user. The user may designate a priority different from the synchronization order to place another folder other than a current folder at a higher priority within the synchronization order.

## Description

### BACKGROUND OF THE INVENTION

### 1. Priority Claim.

This application claims the benefit of priority from U.S. Provisional Application No. 60/875,180, filed December 14, 2006, which is incorporated herein by reference.

### 2. Technical Field.

The invention relates to media systems, and in particular, to a system that having synchronization with preemptive prioritization of synchronization order.

### 3. Related Art.

Multimedia systems may include one or more media players. Such players may include fixed and/or portable storage units and media content playback devices. The multimedia system may index the media files of the multimedia system in one or more databases.

Indexing of the media files may involve a synchronization process. Depending on the size and complexity of the multimedia system, the synchronization process may involve indexing hundreds or thousands of media files. During the synchronization process, a user may be precluded from accessing a media file until the media file has been indexed or until the synchronization operations have been completed. If the synchronization operations Index a significant number of media files, the user may be unable to access a media file for a significant period of time.

### SUMMARY

A media system includes media devices having media files arranged in folders and a database adapted to store information about the media files and/or folders. A synchronizer is used to synchronize information about the media files and/or folders with the database. The synchronizer synchronizes the information to a folder synchronization order. The determined folder synchronization order may be preempted by a user. The user may designate a priority different from the synchronization order to place another folder other than a current folder at a higher priority within the synchronization order.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 shows a multimedia system that synchronizes media folder and file information with a database and that is capable of preemptive user prioritization of a synchronization order.

Figure 2 shows another multimedia system capable of preemptive user prioritization of the synchronization order.

Figure 3 shows a process that may be used to synchronize the information about the media files of the multimedia system with one or more databases.

Figure 4 shows a process that may be used for the first synchronization pass shown in Figure 3.

Figure 5 shows a process that may be used for the second synchronization pass shown in Figure 3.

Figure 6 shows a process that may be used for the third synchronization pass shown in Figure 3.

Figure 7 shows fields that may be used in a file table of a database used in a multimedia system.

Figure 8 shows further fields that may be used in a file table of a database used in a multimedia system.

Figure 9 shows fields that may be used in a folders table of a database used in a multimedia system.

Figure 10 shows fields that may be used in a playlist table of a database used in a multimedia system.

Figure 11 shows fields that may be used in a mediastores table of a database used in a multimedia system.

Figure 12 shows fields that may be used in a slots table of a database used in a multimedia system.

Figure 13 shows fields that may be used in a copies table of a database used in a multimedia system.

### DETAILED DESCRIPTION OF THE PREFERRED EMBODIMENTS

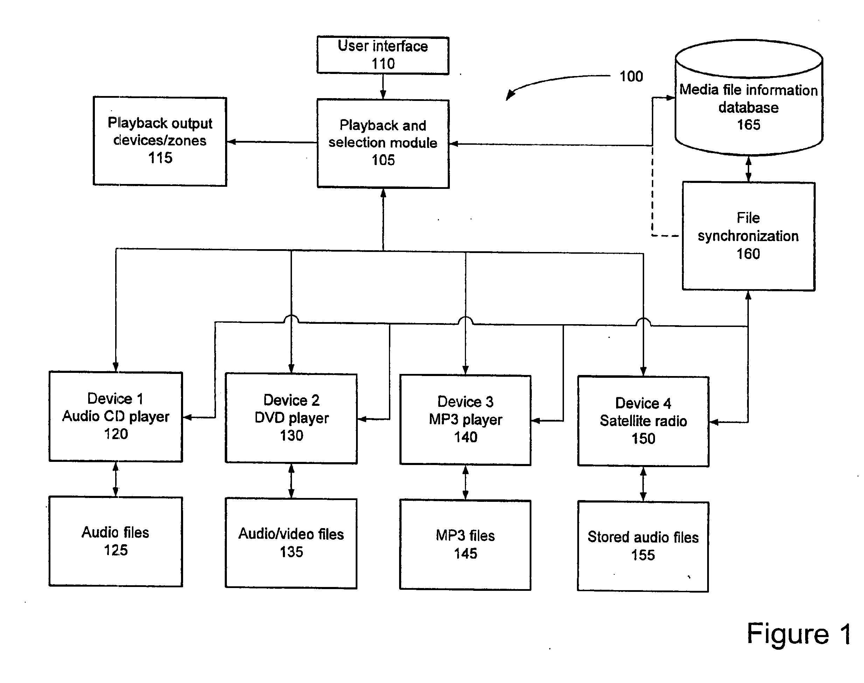

Figure 1 is a diagram of a multimedia system 100 that may have synchronization of media files with preemptive prioritization of the synchronization order. The system 100 may include a media playback and selection module 105 that provides high level interaction between multiple media devices in system 100 and a user interface 110. The media playback and selection module 105 may facilitate selection of media files from multiple devices and allow playback of the selected media files through output devices associated with one or more playback zones 115.

In the system shown in Figure 1, four media devices are attached to system 100. The first device 120 may include a CD player capable of accessing CD audio files 125 for information and playback using the playback and selection module 105. The second device 130 may include a DVD player capable of accessing DVD audio/video files 135 for information and playback using the playback and selection module 105. The third device 140 may include an MP3 player capable of accessing MP3 audio files 145 for information and playback using the playback and selection module 105. The fourth device 150 may include a satellite radio capable of accessing stored audio files 155 for information and playback using the playback and selection module 105.

Information relating to the media files 125, 135, 145, and 155 of devices 120, 130, 140, and 150 may be obtained by the file synchronization module 160. This information may be stored in one or more media file information databases 165. The stored information may include media file characteristics used by the playback and selection module 105 to select a given file having a desired media content. The playback and selection module 105 may access this information directly from the database(s) 165 and/or through the file synchronization module 160. The information in the media file information database 165 may be divided between multiple components, each of which may reside on one or more distributed devices. Media playback and selection module 105 may navigate the information stored in these components as if the information were stored in a single database.

The information in the media file information database 165 may comprise a consolidation of all or nearly all of the information relating to media files 125, 135, 145, and 155. The information may be stored in a format that is generally independent of the device on which each media file is stored. Access to this information by the media playback and selection module 105 may occur without prior knowledge of the media device on which the corresponding media file is stored or located. A media file may be selected for playback through the user interface 110 and the media selection and playback module 105. Selection may be made by media name, media genre, artist, playlist name, or other selection criterion, without regard to the locations or state of the corresponding files. A user may request playback of media files having a genre of "Country" and the media selection and playback module 105 may locate and playback all media files identified of that genre independent of the device(s) on which the files are located or stored.

The system 100 may dynamically detect additional new devices as they are attached or interfaced with the system 100. The system 100 may send and/or retrieve information through a wireless medium (radio or optical signaling, or some other wireless protocol) and/or through a physical, wired connection. Upon identification of the added device, information relating to the media file contents corresponding to the device may be automatically identified and synchronized with the content of the media file information database 165.

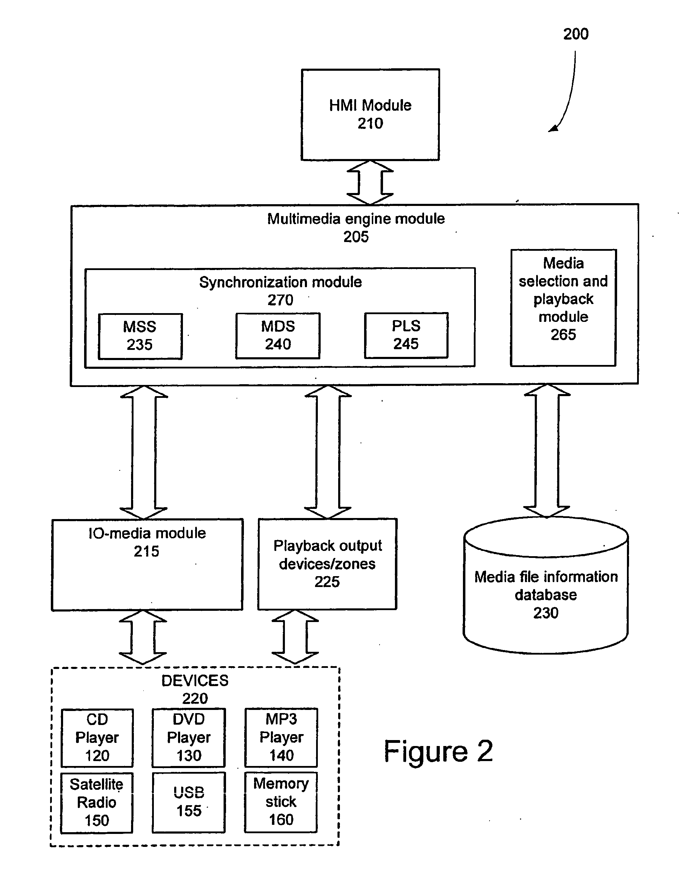

Figure 2 is another block diagram of a multimedia system 200. The system 200 may include a Multimedia Engine (MME) module 205 that interacts with a human machine interface (HMI) module 210. The MME module 205 further interacts with an IO media module 215 that provides an interface that may communicate through one or more protocols with a plurality of different multimedia devices 220. The HMI module 210 may include an interface having multimodal user inputs such as voice, touch buttons, and touch screens that serve as points of interaction with a user to identify the content to be played and to request certain playback operations. The information acquired by the HMI module 210 in response to these user interactions may be passed to the MME module 205. The MME module 205 may obtain media file information for a requested file name, file type, genre, artist, etc., directly from the devices 220 through the IO-media module 215. Alternatively, or in addition, the media file information may be obtained using metadata from media file information stored in one or more databases 230. Database(s) 230 may be used by the MME module 205 to store and retrieve metadata for media files that client applications, such as the HMI module 210, access. The client applications may use this information to display media files to a user or otherwise arrange for playback of the media files in a desired manner on one or more playback output devices/zones 225. Database 230 may support multiple connections from multiple clients in a concurrent manner. The information in database 230 may be divided between multiple files. Each database file can be stored in RAM, flash, or hard drives in a configurable manner that does not affect access by higher level applications.

The HMI module 210 may be used to implement a variety of functions, including the following:
1. Sending requests to the MME 205 for playback and copying of media files on the devices 220. It may be allocated to the HMI module 210, as manipulated by a user, to decide which media is to be played and in what order. The resulting request may then be sent to the MME 205 for processing. Playback of the selected media to one or more of the playback output devices/zones 225 may be placed under the control of the media selection and playback module 265 of the MME module 205.
2. Browsing the media file contents of devices 220. The MME module 205 may access database 230 to expose some or all of the available media to the HMI module 210. User commands may be input to the HMI module 210 to direct the MME module 205 to return information relating to selected media to the HMI module 210.
3. Supporting the MME module 205 browsing interface. Some devices may allow the client application to browse them directly. For example, when a DVD Video is played, its on-screen navigation menu may appear. The HMI module 210 may be used to send navigation commands (such as up, down, left, right, play, etc) to the device through the MME module 205 to navigate the DVD menu.
4. Accepting notifications from the MME module 205 and responding accordingly. The MME module 205 may provide event notifications to a client application. Some examples of events that may generate notifications are "song changed," "new device inserted," and so on. The HMI module 210 may remain synchronized with the MME module 205 and media by, for example, accepting such messages and updating itself accordingly.

The MME module 205 may be implemented as a resource manager that handles device discovery and synchronization using a synchronization module 270. The synchronization module 270 may be used to synchronize the media file information of database 230 with the media content of devices 220. The synchronization module 270 of Figure normal to includes three components: a Media Storage Synchronizer (MSS) 235, a Metadata Synchronizer (MDS) 240, and a Playlist Synchronizer (PLS) 245. The MME module 205 may provide a high-level API for managing playback (play, stop, and seek commands) using the media selection and playback module 265.

The MME module 205 may be responsible for a wide range of functions, including:
1. Playing media. Such media operations may be executed by the media selection and playback module 265 and may include seeking, pausing, stopping, changing volume, adjusting balance and fade, and so on. The media selection and playback module 265 may abstract the type of media and how it is played from the client application level, such as HMI module 210. When the HMI module 210 instructs the MME module 205 to play some media in a DVD player, the HMI module 210 does not need to know whether the media is stored on an audio CD or DVD in the drive. The playback may be handled by the media selection and playback module 265 of the MME module 205. However, for some devices like iPods or PlaysForSure devices, the MME module 205 may pass the playback request to the device itself.
2. Synchronizing devices 220 and the database 230. The synchronization module 270 of the MME module 205 may be used to update the database 230 with metadata corresponding to the media files and devices that it detects. Client applications may browse the database 230 either directly and/or through the MME module 205 to browse music, create playlists, and so on. When a media device 220 is connected to the system 200, the MME module 205 may detect its presence and begin synchronizing the information on the device with the database 230. The information in database 230 may consolidate metadata from multiple, diverse devices 220 into a single format that is independent of the types of devices attached to system 200. Synchronization may also include maintaining a relationship between multiple files having substantially the same media content.
3. Providing a browsing interface for devices. Because of the large list of devices that the MME module 205 may support, it may be provided with a browsing abstraction layer that is the same for all devices. This allows a client application, such as the HMI module 210, to browse all devices supported by the MME 105 without having to support them directly.

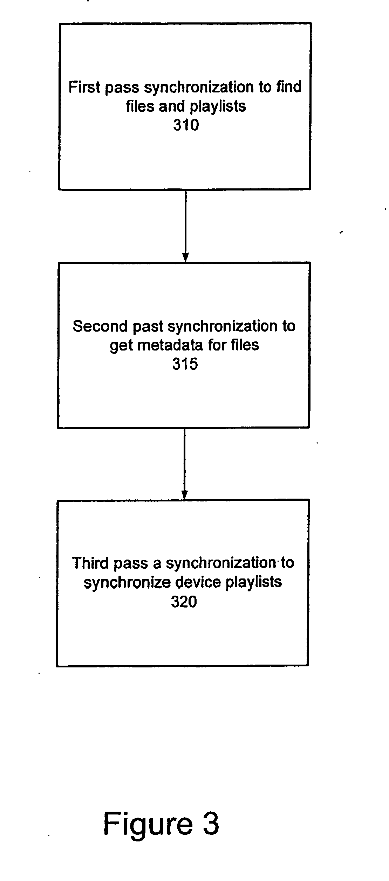

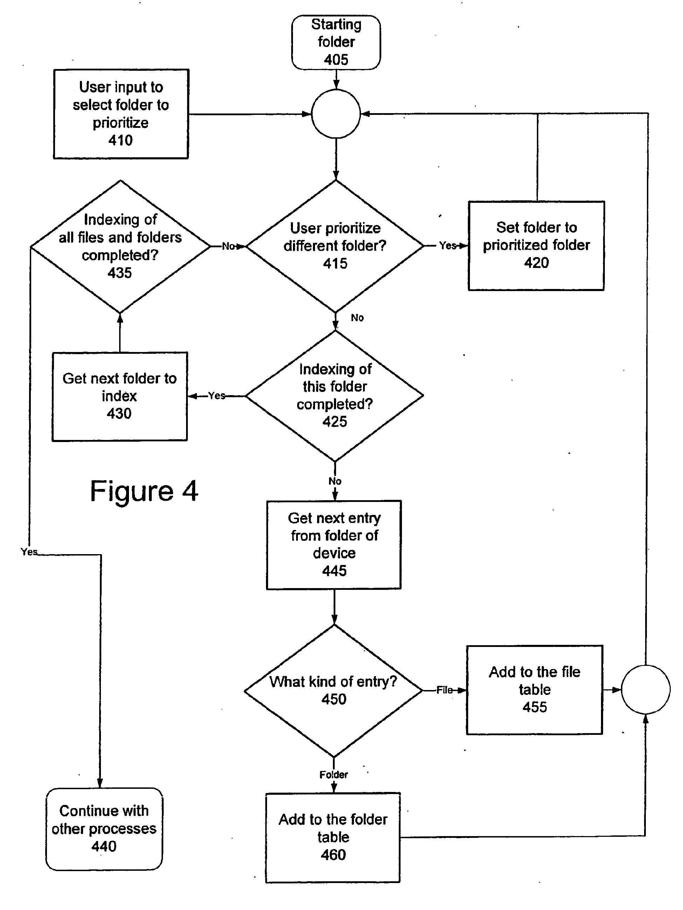

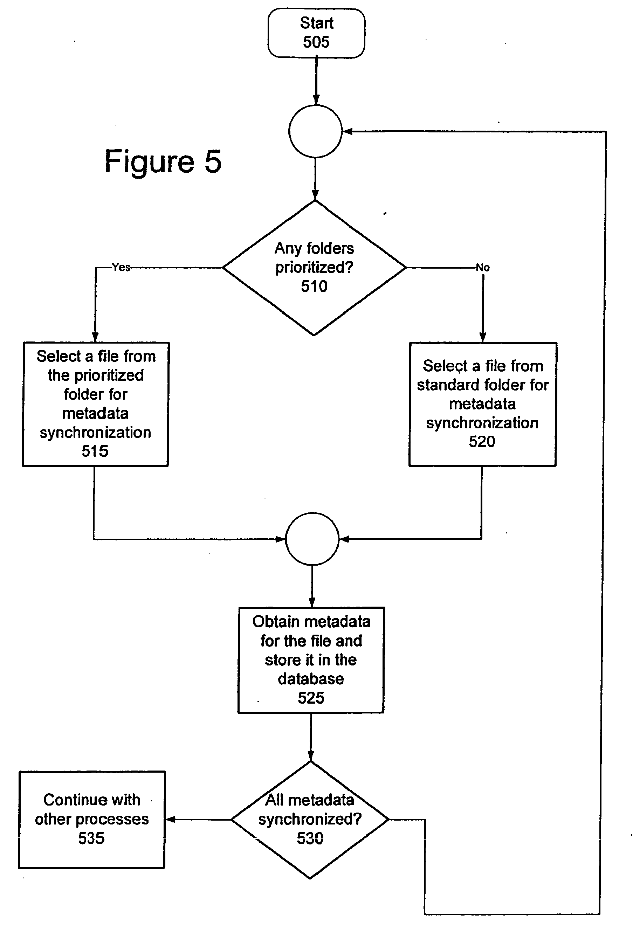

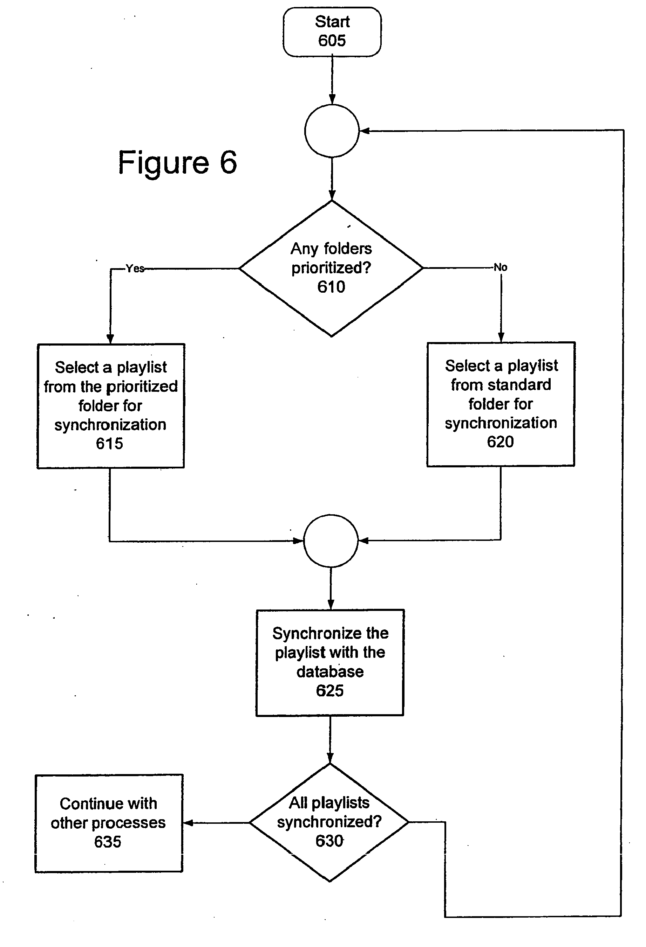

Figure 3 shows a process that may be used to synchronize the information about the media files of the multimedia system with one or more databases. At 305, the process executes a first synchronization pass of the system to find files and playlists, and to record the particulars of the files to be synchronized in folder / file tables. A process that may be used for the fust synchronization pass is shown in Figure 4. A second synchronization pass may be executed at 315. In this second synchronization pass, metadata for the media files and folders may be collected and stored. A process that may be used for the second synchronization pass is shown in Figure 5. A third synchronization pass may be performed at to synchronize the playlists. In this third synchronization pass, information regarding the playlists that are to be synchronized may be recorded in a playlist synchronization. A process that may be used for the third synchronization pass is shown in Figure 6.

Figure 4 shows a process that may be used for the first synchronization pass shown at 310 of Figure 3. The synchronization process may begin at a starting folder at 405. The starting folder may be a system defined parameter such as a default folder at which all file and folder synchronizations are to begin. Additionally, or in the alternative, the starting folder may be the root folder of an existing and/or newly added media storage and/or playback device. The order in which the files are to be synchronized may correspond to a system defined parameter, such as alphabetical order at each level of the filesystem, device number, device type, or similar parameter.

At 410, a user may preempt the synchronization process to select a different file and/or folder for synchronization other than the starting folder or the subsequent folder in the synchronization order. The user entry at 410 may correspond to an a prior location stored by the user, a location entered in real time, a location entered in real time in response to a query, a pre-determined default location or some other user selectable location.

At 415, the process determines whether the current folder is different from the one prioritized by the user. If different, the process continues to 420 where the prioritized folder is set as the current folder for indexing. With the current folder set to the newly prioritized folder requested by the user, processing may return back to 415 thereby allowing the user to further preempt the prioritization process.

If further user preemption does not occur, processing may continue at 425. At 425, the process determines whether the current folder has been completely indexed. If indexing of the current folder has been completed, then the next folder is selected at 430. At 435, the process determines whether all of the folders that are to be synchronized have been indexed. If all of the folders have been indexed, other processes may be executed at 440.

If the process determines at 425 that indexing of the current folder has not been completed, the next entry from the folder is retrieved at 445. The process analyzes the type of folder entry at 450. If the process determines at 450 that the entry is a file, then information about the file is added to a file table of one or more databases at 455. If the entry is a folder, then information about the folder is added to a folder table of one or more databases at 460. The process of Figure 4 may continue with the indexing operations until all of the files and folders that are to be synchronized have been indexed.

Figure 5 shows a process that may be used to execute the second synchronization pass shown at 315 of Figure 3. The process may start at 505. At 510, the process determines whether any folders have been prioritized by the user. If no folders have been prioritized, the process may select a file from a standard priority folder for metadata synchronization. Otherwise, a file from a prioritized folder is selected at 515 for metadata synchronization.

In either case, processing may proceed at 525. At 525, the metadata for the file identified at either 515 or 520 is obtained and is stored in the database. If it is determined at 530 that there are additional files that are to have their metadata synchronized, then processing may return to 510. Otherwise, control may be given to further processing operations at 535.

Figure 6 is a process that may be used to execute the third synchronization pass shown at 320 of Figure 3. The process may start at 605. At 610, the process may determine whether any folders have been prioritized by the user. If no folders have been prioritized, the process may select a playlist from a standard priority folder for synchronization. Otherwise, a playlist from a prioritized folder is selected at 515 for metadata synchronization.

In either case, processing may proceed at 625 where the metadata for the playlist identified at either 615 or 620 is obtained and is stored in the database. Exemplary playlists are .m3u, iTunes and PLS and other playlist formats. If it is determined at 630 that there are additional playlists to be synchronized, then processing may return to step 610. Otherwise, the process may transfer control to other processes at 635.

If a user has preemptively prioritized a folder for synchronization, the information about the files and folders in the prioritized folder may be available to other portions of the media system at a time earlier than they otherwise may be in the absence of such preemptive prioritization. The media selection and playback module 265 may access this information to playback files of the preemptively prioritized folder and/or to display information about the files and folders.

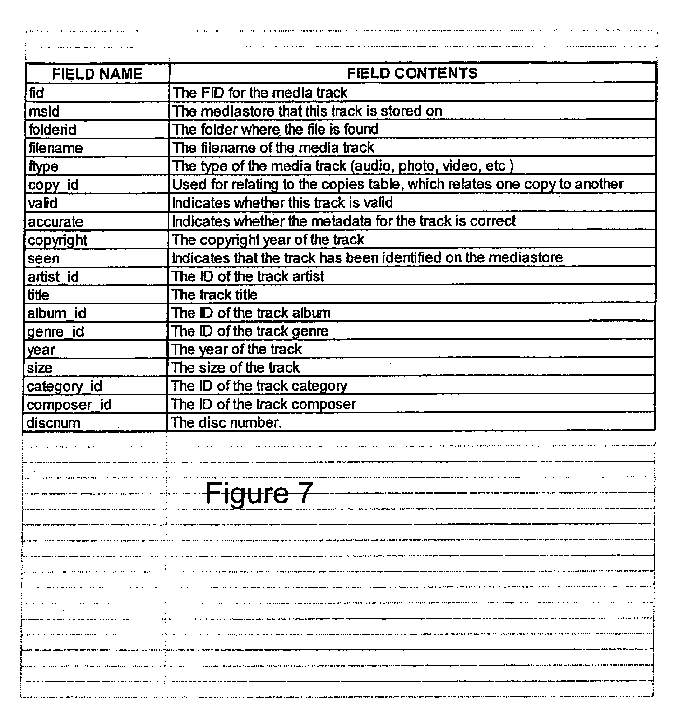

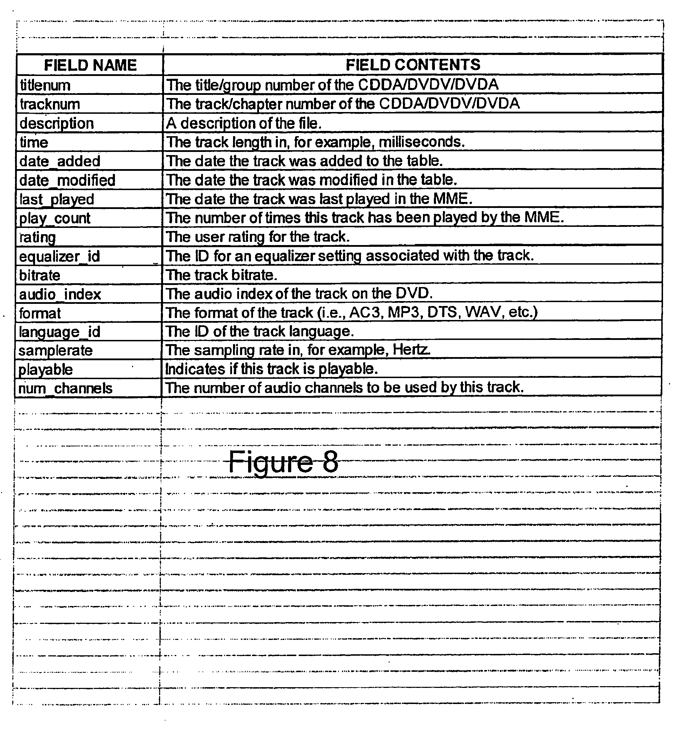

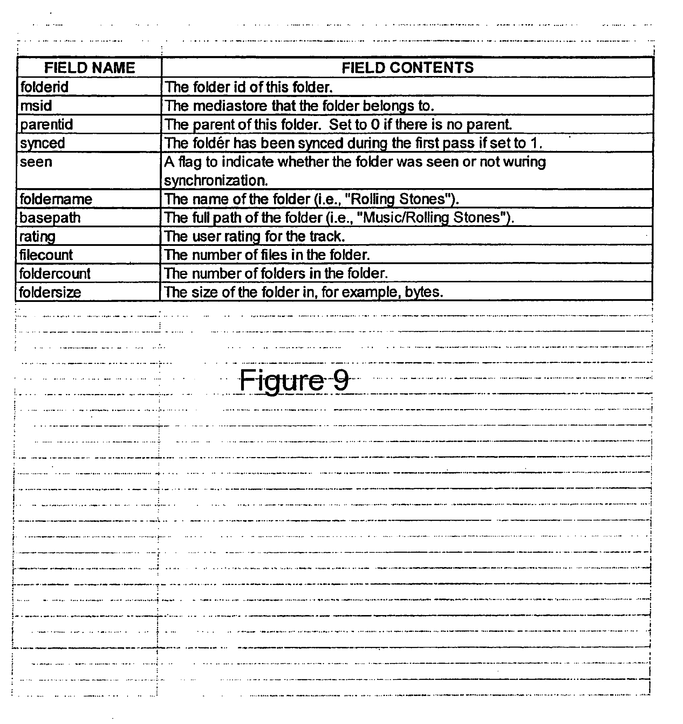

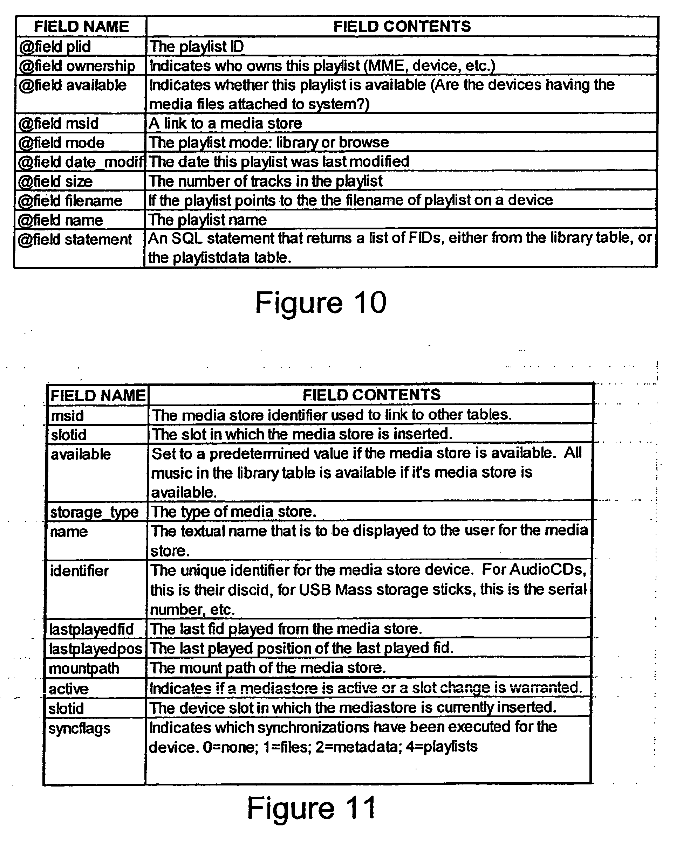

Database 230 may be used to index all or some of the multimedia files. The database 230 may communicate through a structured query language or other language that may relate one file to another. The records in database 230 may have a number of different structures depending on the requirements of the system. Some fields that may be used in the files table of such database records and their corresponding meaning are shown in the tables of Figures 7 and 8. Fields that may be used in a folders table are shown in Figure 9. Fields that may be used in connection with a playlist table in database 230 are shown in Figure 10.

Database 230 also may include a media stores table. Each mediastore in the mediastores table describes one physical device containing media that the multimedia engine 205 has detected. This may be an iPod®, hard drive, USB stick, DVD video disc, or some other device/medium that may be read from or written to. Mediastores may come and go as they are inserted and removed and this table is updated accordingly as that happens. The entries in the file and folders tables may belong to one mediastore, which is where the media is located or indexed. Mediastores may be uniquely identified by an identifier that may be used to attain the identifier for the mediastore which links to the other tables. Figure 11 and shows fields that may be used in connection with the media stores table.

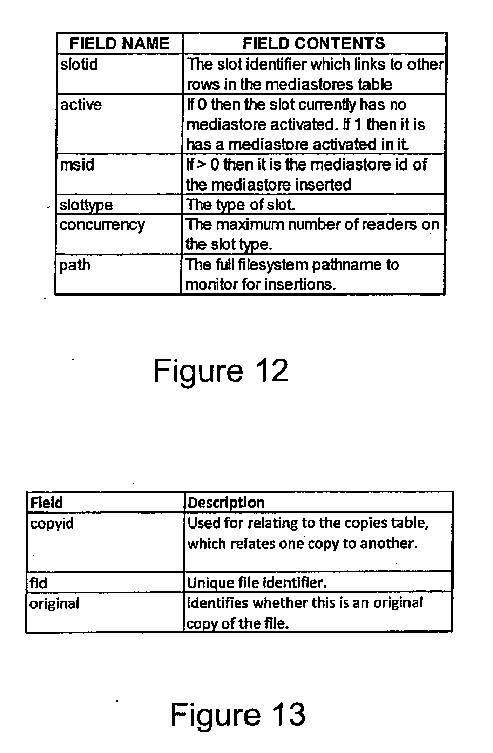

Still further, the database 230 may include a slots table. Slots may be used to define filesystem locations where mediastores can be connected and removed. For example, an audiocd may be found in the filesystem at location /fs/cd0. If it were a networked audiocd, it may be found at /net/remote_host/fs/cd0. The MME 205 may be designed to support an unlimited number of slots. Figure 12 shows fields that may be used in connection with the slots table.

The metadata corresponding to a file may be stored with the media containing the file. However, it is also possible for an external source to add metadata or to link metadata to a file. Metadata about a file may include information regarding the music type and the group that produced the music. Some alternative systems incorporate various additional types of metadata. For example, the metadata may include information on the quality of the content stored in the file. This quality information may be used in the selection of contents to be played for a user, or with certain license or other restrictions associated with the content.

Fields that may be used in a copies table are shown in Figure 13. The copies table may be used to relate multiple copies of files having substantially the same media content to one another. The copy_id field of Figure 3 may be used for relating the identified file to the copyid field of the copies table of Figure 7. The fid field of the copies table may be a unique file identifier that references the corresponding fid in the library format shown in Figure 3. The "original" field indicates whether a file is an original or not.

The media system may be implemented using a combination of hardware and software components. The software components may be stored in local and/or remote storage devices in that are consolidated and/or distributed. One or more processors may be used to execute the code of the software components. Interface hardware and software may be used to communicate with and/or access media storage and playback devices.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A media system comprising:
a plurality of media devices, where each of the media devices includes one or more media files arranged in one or more folders;
a database adapted to store information about the one or more media files; and
a synchronizer adapted to synchronize information about the one or more media files with the database, where the synchronizer synchronizes the information in accordance with a determined folder synchronization order, and where the determined folder synchronization order may be preempted by a user to place a folder at a higher prioritization order.

2. The media system of claim 1, where the determined folder synchronization order comprises starting synchronization operations at a root folder of a media device of the plurality of media devices.

3. The media system of claim 2, where the determined folder synchronization order comprises continuing synchronization operations at subsequent filesystem levels in alphabetical order.

4. The media system of claim 1, where the determined folder synchronization order may be preempted by a user to synchronize an a prior folder stored by the user.

5. The media system of claim 1, where the determined folder synchronization order may be preempted by a user to synchronize a folder entered in real time.

6. The media system of claim 1, where the determined folder synchronization order may be preempted by a user to synchronize a folder entered in real time in response to a query.

7. The media system of claim 1, where the determined folder synchronization order may be preempted by a user to synchronize a predetermined default folder.

8. A media system comprising:
a plurality of media devices, where each of the media devices includes one or more media files arranged in one or more folders;
a database adapted to store information about the one or more media files and folders; and
a human machine interface module adapted to accept media content selection commands from a user;
a media engine module accepting media content selection commands from the human machine interface to select a media file for playback; and
a synchronization module synchronizing information about the one or more media files and folders with the database, where the synchronizer synchronizes the information in accordance with a determined folder synchronization order, and where the determined folder synchronization order may be preempted by a user through the human machine interface module to place a folder at a higher prioritization order.

9. The media system of claim 8, where the determined folder synchronization order comprises starting synchronization operations at a root folder of a media device of the plurality of media devices.

10. The media system of claim 9, where the determined folder synchronization order comprises continuing synchronization operations at subsequent filesystem levels in alphabetical order.

11. The media system of claim 8, where the determined folder synchronization order may be preempted by a user to synchronize an a prior folder stored by the user.

12. The media system of claim 8, where the determined folder synchronization order may be preempted by a user to synchronize a folder entered in real time.

13. The media system of claim 8, where the determined folder synchronization order may be preempted by a user to synchronize a folder entered in real time in response to a query.

14. The media system of claim 8, where the determined folder synchronization order may be preempted by a user to synchronize a predetermined default folder.

15. A media system comprising:
media device means for storing one or more media files in one or more folders;
database means for storing information about the one or more media files; and
synchronization means for synchronizing information about the one or more media files with the database means, where the synchronization means synchronizes the information in accordance with a determined folder synchronization order, and where the determined folder synchronization order may be preempted by a user to place a folder at a higher prioritization order.

16. The media system of claim 15, where the determined folder synchronization order comprises starting synchronization operations at a root folder of a media device of the plurality of media devices.

17. The media system of claim 16, where the determined folder synchronization order comprises continuing synchronization operations at subsequent filesystem levels in alphabetical order.

18. The media system of claim 15, where the determined folder synchronization order may be preempted by a user to synchronize an a prior folder stored by the user.

19. The media system of claim 15, where the determined folder synchronization order may be preempted by a user to synchronize a folder entered in real time.

20. The media system of claim 15, where the determined folder synchronization order may be preempted by a user to synchronize a folder entered in real time in response to a query.

21. The media system of claim 15, where the determined folder synchronization order may be preempted by a user to synchronize a predetermined default folder.

22. A method for operating a media system comprising:
storing one or more media files in one or more folders;
organizing information about the one or more media files in one or more databases; and
synchronizing information about the one or more media files with the one or more databases, where the information is synchronize in accordance with a determined folder synchronization order; and
allowing a user to preempt the determined folder synchronization order to place a folder at a higher prioritization order.

23. The method of claim 22, where the determined folder synchronization order comprises starting synchronization operations at a root folder of a media device.

24. The method of claim 22, where the determined folder synchronization order comprises continuing synchronization operations at subsequent filesystem levels of the media device in alphabetical order.

25. The method of claim 22, where the determined folder synchronization order may be preempted by a user to synchronize an a prior folder stored by the user.

26. The method of claim 22, where the determined folder synchronization order may be preempted by a user to synchronize a folder entered in real time.

27. The method of claim 22, where the determined folder synchronization order may be preempted by a user to synchronize a folder entered in real time in response to a query.

28. The method of claim 22, where the determined folder synchronization order may be preempted by a user to synchronize a predetermined default folder.
